# EUROPÄISCHE PATENTSCHRIFT

(11) **EP 1 618 319 B1**
(45) Veröffentlichungstag und Bekanntmachung des Hinweises auf die Patenterteilung: **16.08.2006**
(21) Anmeldenummer: 03709538.7
(22) Anmeldetag: 10.04.2003
(51) Int. Cl.: F16H 21/46, F16H 35/02

(54) **VORRICHTUNG ZUR ERZEUGUNG VON PULSIERENDEN BEWEGUNGEN**
DEVICE FOR GENERATING PULSATING MOVEMENTS
DISPOSITIF PERMETTANT DE GENERER DES MOUVEMENTS DE PULSATION

(43) Veröffentlichungstag der Anmeldung: 25.01.2006
(73) Patentinhaber: Oloid AG, 4053 Basel (CH)
(72) Erfinder: FRITSCHI, Markus, CH-4452 Itingen (CH)
(74) Vertreter: Lusuardi, Werther
(86) Internationale Anmeldenummer: PCT/CH2003/000235
(87) Internationale Veröffentlichungsnummer: WO 2004/090383

(56) Entgegenhaltungen:
- WO-A-99/05435
- US-A- 4 669 225
- US-A- 4 784 338
- US-B1- 6 435 995
- SCHATZ P: "RHYTHMUSFORSCHUNG UND TECHNIK" , RHYTHMUSFORSCHUNG UND TECHNIK, XX, XX, PAGE(S) 77-87 XP002058827 in der Anmeldung erwähnt das ganze Dokument
- PATENT ABSTRACTS OF JAPAN vol. 2000, no. 02, 29. Februar 2000 (2000-02-29) & JP 11 319879 A (UNITIKA LTD), 24. November 1999 (1999-11-24)

## Beschreibung

Die Erfindung bezieht sich auf eine Vorrichtung zur Erzeugung von pulsierenden Bewegungen gemäss dem Oberbegriff des Patentanspruchs 1.

Aus der WO 99/05435 ABT ist ein Getriebe zur formschlüssigen Drehmomentübertragung zwischen zwei Wellen bekannt, wobei die zwei Wellen an die Enden einer auf dem Prinzip des umstülpbaren Würfels (Paul Schatz, "Rhythmusforschung und Technik, Verlag Freies Geistesleben, 1975/98, 2. Auflage) basierenden Kette von mindestens zwei bewegbaren Verbindungsgliedern gekoppelt sind. Die zwei Verbindungsglieder sind in einer Ausführungsform als kreisringförmige Scheiben oder Tori ausgestaltet, mittels welcher die kinetische Energie eines strömenden Gases, einer strömenden Flüssigkeit oder eines anderen strömenden viskosen Mediums in ein Drehmoment an zwei pulsierend rotierende Wellen umwandelbar ist. Umgekehrt ist die Umwandlung eines Drehmomentes an mindestens einer rotierenden Welle in eine pulsierende Strömungsbewegung eines Gases, einer Flüssigkeit oder eines anderen viskosen Mediums auch möglich, wobei allerdings durch die Relativbewegung der beiden kreisringförmigen Scheiben ein hohes Mass an Dissipationsenergie erzeugt und dadurch ein geringerer Wirkungsgrad erzielt wird.

Hier will die Erfindung Abhilfe schaffen. Der Erfindung liegt die Aufgabe zugrunde, eine Vorrichtung zur Erzeugen von pulsierenden Bewegungen zu schaffen, welche einen Antriebskörper mit einem maximalen Wirkungsgrad aufweist.

Die Erfindung löst die gestellte Aufgabe mit einer Vorrichtung zur Erzeugung von pulsierenden Bewegungen, welche die Merkmale des Anspruchs 1 aufweist.

Die durch die Erfindung erreichten Vorteile sind im wesentlichen darin zu sehen, dass dank der erfindungsgemässen Vorrichtung:
- eine Strömungsbewegung eines Gases, einer Flüssigkeit und/oder eines Schüttgutes mit maximalem Wirkungsgrad des Antriebskörpers erzeugbar ist; und
- innerhalb eines grossen Volumens des Gases, der Flüssigkeit und/oder des Schüttgutes eine weitreichende Strömung erreichbar ist; oder
- umgekehrt die kinetische Energie eines strömenden Gases, einer strömenden Flüssigkeit und/oder eines strömenden Schüttgutes mit maximalem Wirkungsgrad in eine Rotationsbewegung mindestens einer Welle umwandelbar ist.

Der Antriebskörper kann also einerseits zur Erzeugung einer pulsierenden Strömungsbewegung eines Gases, einer Flüssigkeit und/oder Schüttgutes mittels motorischer Antriebsmittel oder andererseits zur Erzeugung einer pulsierenden Rotationsbewegung einer Welle durch eine auf den Antriebskörper wirkende kinetische Strömungsenergie eines Gases, Flüssigkeit und/oder Schüttgutes eingesetzt werden. Bei der letztgenannten Anwendung kann ein Generator mittels eines Getriebes mit ovalen Zahnrädern an die mindestens eine pulsierend rotierende Welle angeschlossen werden.

In einer bevorzugten Ausführungsform ist der Antriebskörper ein Oloid als spezielle Ausführung eines Polysomes. Die mathematische Definition des Oloides ist beschrieben in:
Paul Schatz
"Rhythmusforschung und Technik"
Verlag Freies Geistesleben
1998, 2. Auflage

Die Vorteile des Oloides liegen in seinem geringen Widerstand, beispielsweise bei seinem Einsatz als Rührkörper. Gemäss der von Paul Schatz entdeckten Inversionskinematik bewegt sich das Oloid wie ein Paddel oder wie eine Schwanzflosse eines Fisches im zu rührenden Medium und erzeugt dabei eine rhythmisch pulsierende Strömungsbewegung.

Die Erfindung ist definiert durch die Merkmale des Anspruchs 1. Nach der Erfindung spannen die Schenkel jedes bogenartigen Antriebshebels eine Ebene auf. Dabei steht verteilhaft jede erste Drehachse quer zu der durch die Schenkel des entsprechenden Antriebshebels aufgespannten Ebene des mit dieser Drehachse verbundenen Antriebshebels, während die zwei zweiten Drehachsen in diesen Ebenen liegen. Die zwei zweiten Drehachsen stehen windschief zueinander. Durch diese Ausgestaltung der Antriebshebel ist der Vorteil erreichbar, dass der Antriebskörper als mittleres Glied eines Gelenksystemes nach dem Prinzip der umstülpbaren Gelenksysteme eingesetzt werden kann, so dass der Vorteil erreichbar ist, dass das Gas, die Flüssigkeit oder das Schüttgut in rhythmischen Impulsen gefördert wird. Dieses Prinzip der umstülpbaren Gelenksysteme ist eines der Anwendungsbeispiele der Umstülpungskinematik von Paul Schatz und wird ausführlich beschrieben in: Paul Schatz, "Rhythmusforschung und Technik", Verlag Freies Geistesleben, 1975/98, 2. Auflage.

Die ovalen Zahnräder weisen je eine grosse Halbachse a und eine kleine Halbachse b auf. Die ovale Form dieser Zahnräder ist dann dadurch festgelegt, dass zwei ineinander eingreifende Zahnräder sich bei konstantem Achsabstand formschlüssig abwälzen. Der Achsabstand zwischen zwei ineinander eingreifenden ovalen Zahnrädern setzt sich aus der Summe der grossen Halbachse a und der kleinen Halbachse b dieser beiden ovalen Zahnräder zusammen.

In einer anderen Ausführungsform weist mindestens ein ovales Zahnrad ein Verhältnis zwischen seiner kleinen Halbachse b und seiner grossen Halbachse a von 1 : √2 auf.

In wiederum einer anderen Ausführungsform weist mindestens ein ovales Zahnrad ein Verhältnis zwischen seiner kleinen Halbachse b und seiner grossen Halbachse a von 1 : 2 aufweist.

Die beiden Verhältnisse zwischen der kleinen Halbachse b und der grossen Halbachse a von 1 : √2 oder von 1 : 2 sind dazu geeignet, eine gleichförmige Rotationsbewegung beispielsweise einer Antriebswelle in eine ungleichförmige Rotationsbewegung der zwei an den Antriebshebel angreifenden Wellen zu übertragen, welche gemäss dem Prinzip der umstülpbaren Gelenksysteme pulsierend rotieren.

Die Erfindung und Weiterbildungen der Erfindung werden im folgenden anhand der teilweise schematischen Darstellungen mehrerer Ausführungsbeispiele noch näher erläutert.

Es zeigen:
Fig. 1 eine Ansicht einer Ausführungsform der erfindungsgemässen Vorrichtung;
Fig. 2 eine Draufsicht auf die in Fig. 1 dargestellte Ausführungsform der erfindungsgemässen Vorrichtung;
Fig. 3 eine perspektivische Ansicht des Antriebskörpers einer Ausführungsform der erfindungsgemässen Vorrichtung; und
Fig. 4 die Abwicklung des in Fig. 3 dargestellten Antriebskörpers;
Fig. 5 eine Aufsicht auf das Getriebe einer anderen Ausführungsform der erfindungsgemässen Vorrichtung;
Fig. 6 eine Aufsicht auf das Getriebe wiederum einer anderen Ausführungsform der erfindungsgemässen Vorrichtung;
Fig. 7 eine Aufsicht auf das Getriebe wiederum einer anderen Ausführungsform der erfindungsgemässen Vorrichtung; und
Fig. 8 eine Aufsicht auf das Getriebe wiederum einer anderen Ausführungsform der erfindungsgemässen Vorrichtung.

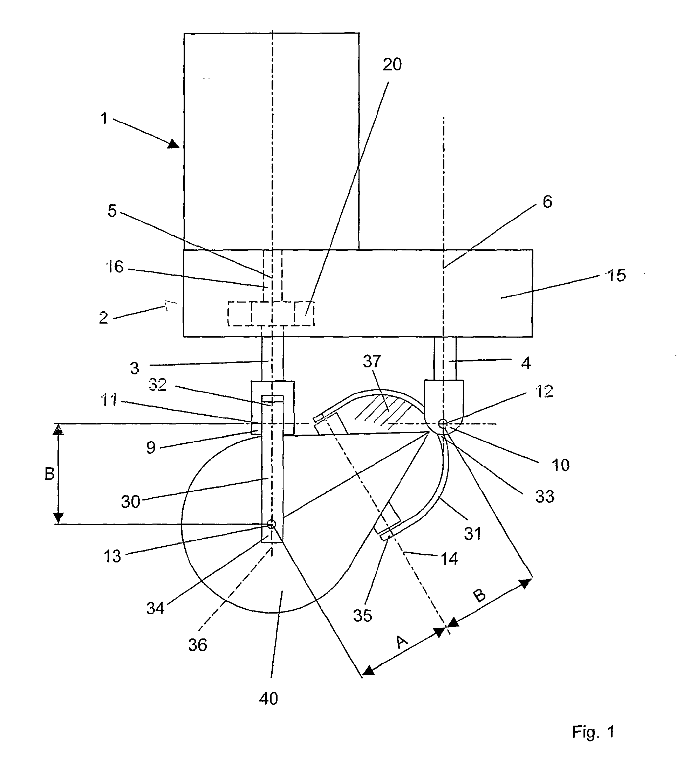

In Fig. 1 dargestellt ist eine Ausführungsform der erfindungsgemässen Vorrichtung, welche zur Erzeugung einer Strömungsbewegung des den Antriebskörper 40 einschliessenden Fluides dient. Der als Oloid ausgestaltete Antriebskörper 40 ist derart angeordnet, dass sein Mittelteil das mittlere Glied eines aus drei Gliedern bestehenden, umstülpbaren Gelenksystemes bildet. Die beiden äusseren Glieder sind als U-förmige Antriebshebel 30;31 ausgestaltet, welche an ihren Schenkeln angeordnet, je zwei vordere, freie Enden 34;35 und an ihren Verbindungsstegen je ein hinteres Ende 32;33 aufweisen. Die hinteren Enden 32; 33 der beiden Antriebshebel 30;31 sind je mittels einer ersten Drehachse 11;12 mit je einem vorderen Ende 9; 10 von zwei parallelen Wellen 3;4 bewegbar verbunden. Die beiden ersten Drehachsen 11;12 sind so mit den Antriebshebeln 30;31 verbunden, dass die erste, mit dem ersten Antriebshebel 30 verbunden Drehachse 11 senkrecht auf einer durch die Schenkel und den Verbindungssteg des Antriebshebels 30 aufgespannten Ebene 36;37 steht und die mit dem zweiten Antriebshebel 31 verbundene, erste Drehachse 12 senkrecht auf einer durch die Schenkel und den Verbindungssteg des zweiten Antriebshebels 31 aufgespannten Ebene 37 steht. Zwischen der ersten und zweiten Drehachse 11;12;13;14 an jedem Antriebshebel 30;31 ist ein Abstand B.

Der Antriebskörper 40 ist mittels zwei zweiten, an den vorderen Enden 34;35 der Antriebshebel 30;31 rotierbar angeordneten Drehachsen 13;14 bewegbar mit den Antriebshebeln 30;31 verbunden,. Die zwei zweiten Drehachsen 13;14 sind windschief zueinander angeordnet und weisen einen Abstand A zueinander auf. Dieser Abstand A entspricht hier dem Abstand B.

Durch die Bedienung dass die Antriebshebel 30;31 und das zwischen den beiden zweiten Drehachsen 13;14 liegende Mittelteiles des als Oloid ausgestalteten Antriebskörpers 40 die drei Glieder eines umstülpbaren Gelenksystemes bilden, ergibt sich der Abstand zwischen den beiden parallelen Wellen 3;4. Die hinteren Enden (nicht gezeichnet) der beiden parallelen Wellen 3;4 sind in einem Getriebekasten 15 um ihre Längsachsen 5;6 rotierbar gelagert. In der hier dargestellten Ausführungsform ist nur die erste Welle 3 mittels eines ovale Zahnräder 20 aufweisenden Getriebes 2 mit der Antriebswelle 16 der als Motor ausgestalteten Antriebsmittel 1 verbunden.

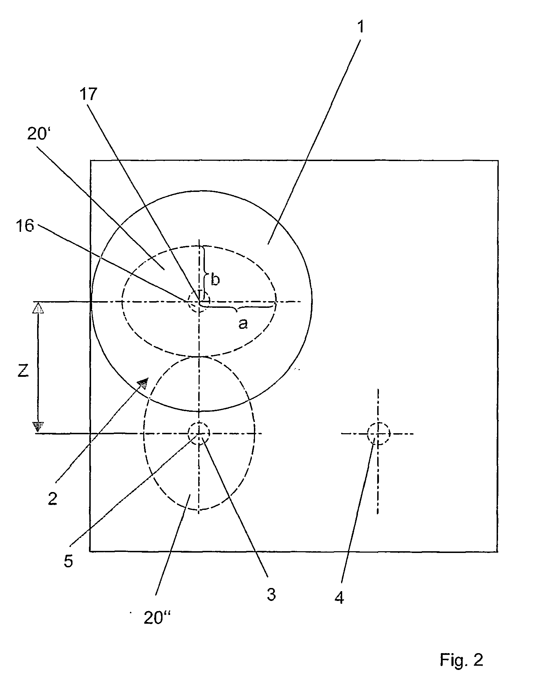

Wie in Fig. 2 dargestellt sind die Längsachsen 5;17 der ersten Welle 3 und der Antriebswelle 16 um einen Abstand Z beabstandet, welcher der Summe aus der kleinen Halbachse b und der grossen Halbachse a der zwei ovalen Zahnräder 20';20" entspricht. Die beiden ovalen Zahnräder 20';20" sind somit bei jedem beliebigen Drehwinkel miteinander im Eingriff. Durch die beiden ovalen Zahnräder 20';20" im Getriebe 2 ist erreichbar, dass eine gleichförmige Rotationsbewegung der Antriebswelle 16 in eine ungleichförmige, rhythmisch pulsierende Rotationsbewegung der ersten Welle 3 transformierbar ist. Durch die Wahl des Verhältnisses zwischen der kleinen Halbachse b zur grossen Halbachse a der ovalen Zahnräder 20';20" von hier 1 : √2 ist erreichbar, dass die ungleichförmige Rotationsbewegung der ersten Welle 3 die taumelnde und rotierende Bewegung des ersten Antriebshebels 30 des umstülpbaren Gelenksystemes bewirkt.

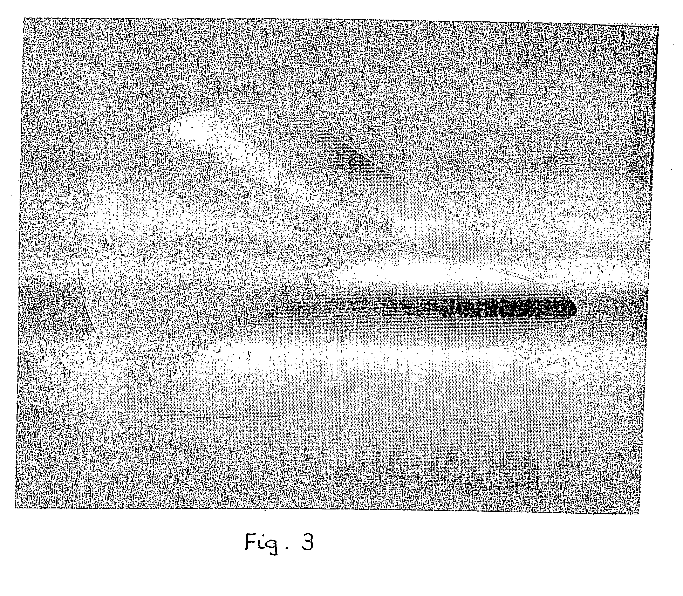

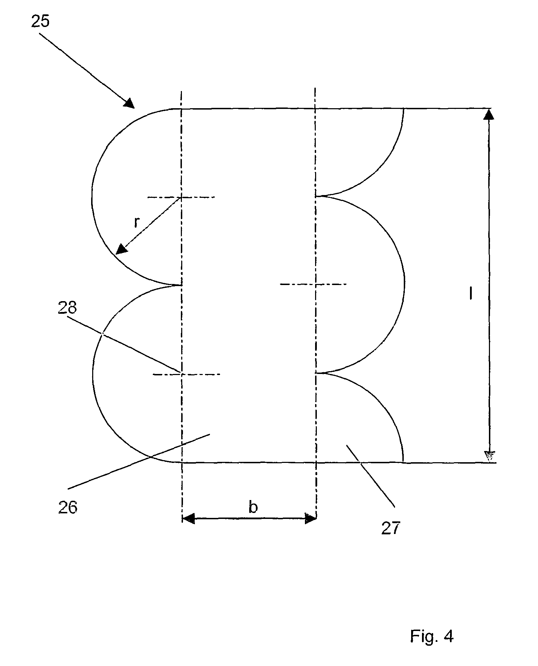

Fig. 3 zeigt eine perspektivische Ansicht des als Oloid ausgestalteten Antriebskörpers 40. Die Abwicklung dieses Oloides ist in Fig. 4 dargestellt. Die abgewickelte Oberfläche 25 des als Oloides setzt sich aus einem rechteckigen Mittelelement 26 und je vier, auf den langen Seiten des rechteckigen Mittelelementes 26 angeordneten viertelkreisförmigen Elementen 27 zusammen. Das rechteckige Mittelelement 26 hat eine Länge 1 und eine Breite b, wobei hier die Breite b dem Abstand A (Fig. 1) zwischen den zwei zweiten Drehachsen 13;14 entspricht. Die Radien r der viertelkreisförmigen Elemente 27 haben hier eine Abmessung, weiche einem Viertel der Länge 1 ausmacht: r = 1/4. Ferner sind die Zentren 28 der viertelkreisförmigen Elemente 27 so angeordnet, dass sie auf der einen langen Seite des reckteckigen Mittelelementes 26 um den Radius r von den Enden der langen Seiten beabstandet sind während auf der anderen langen Seite des rechteckigen Mittelelementes 26 zwei der Zentren 28 mit den Ecken zwischen den langen und den kurzen Seiten des rechteckigen Mittelelementes 26 zusammenfallen und ein weiteres, drittes Zentrum 28 auf der halben Länge I der langen Seite des rechteckigen Mittelelementes 26 angeordnet ist.

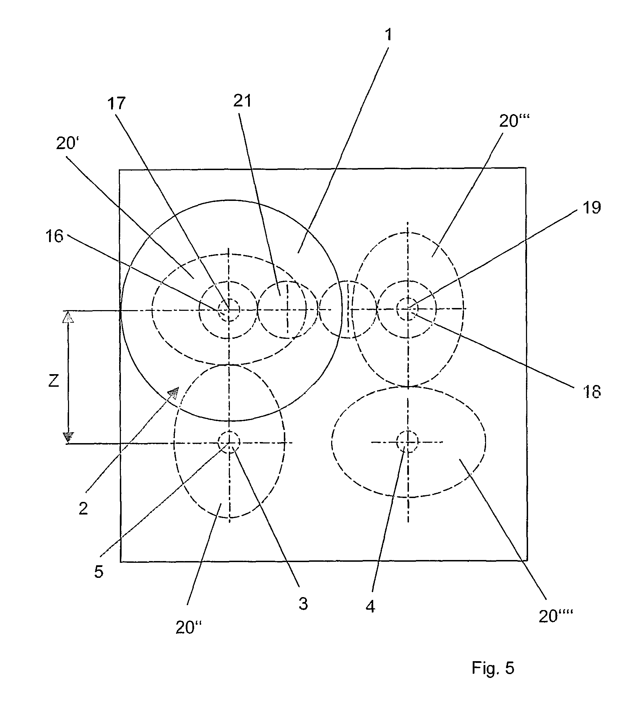

In Fig. 5 ist eine Ausführungsform des Getriebes 2 dargestellt, welches sich von der in Fig. 2 dargestellten Ausführungsform nur darin unterscheidet, dass beide Wellen 3;4 mittels des Getriebes 2 durch die Antriebswelle 16 angetrieben werden. Dazu ist zwischen der Antriebswelle 16 und einer weiteren, zur Antriebswelle 16 parallelen gleichförmigen Welle 18 ein Zwischengetriebe mit vier kreisförmigen Zahnrädern 21 angeordnet. Die Längsachsen 5;6;17;19 der Antriebswelle 16, der zweite gleichförmig rotierende Welle 18, sowie der beiden ungleichförmig rotierenden Wellen 3;4 sind parallel und an den Ecken eines Rechteckes mit der Höhe Z angeordnet. Die beiden ovalen Zahnräder 20';20", welche zur Drehmomentübertragung zwischen der ersten Welle 3 und der Antriebswelle 16 dienen sind bezüglich ihrer Halbachsen a;b (Fig. 2) um 90° zueinander gedreht angeordnet. Dasselbe gilt für die beiden ovalen Zahnräder 20"';20"", welche zur Drehmomentübertragung zwischen der zweiten Welle 4 und der zweiten gleichförmig rotierenden Welle 18 dienen. Beide Zahnradpaare 20';20" und 20"';20"" sind ferner um 90° gedreht zueinander angeordnet. Die Anzahl der kreisförmigen Zahnräder 21 ist derart gewählt, dass sich für die Antriebswelle 16 und die zweite gleichförmig rotierende Welle 18 ein gegenläufiger Drehsinn ergibt.

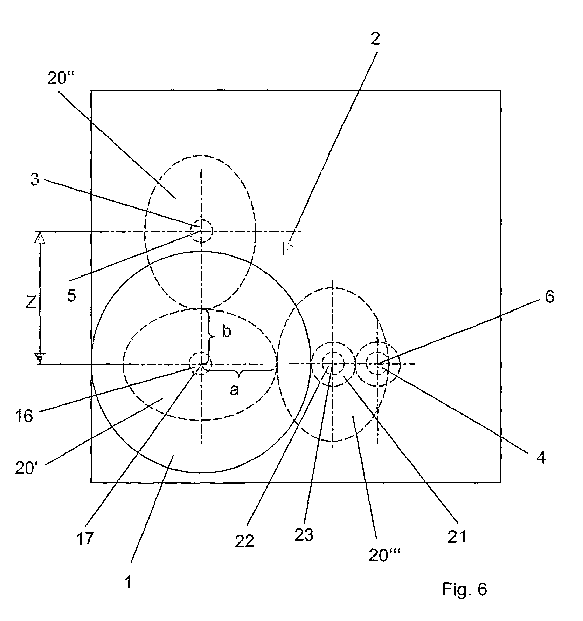

In Fig. 6 ist eine andere Ausführungsform des Getriebes 2 dargestellt, welche sich von der in Fig. 2 dargestellten Ausführungsform darin unterscheidet, dass die Drehmomentübertragung von mit den Antriebsmitteln 1 verbundenen Antriebswelle 16 auf beide Wellen 3;4 mittels Zahnrädern 20;21 erfolgt. Ferner sind die ovalen Zahnräder 20 hier so ausgestaltet, dass das Verhältnis zwischen der kleinen Halbachse b und der grossen Halbachse a 1 : √2 beträgt. Die Drehmomentübertragung zwischen der gleichförmig rotierenden Antriebswelle 16 und der ungleichförmig rotierenden ersten Welle 3 erfolgt über zwei ineinander eingreifende ovale Zahnräder 20';20", weiche bezüglich ihrer Halbachsen a;b um 90° gedreht sind. Die Drehmomentübertragung zwischen der gleichförmig rotierenden Antriebswelle 16 und der ungleichförmig rotierenden zweiten Welle 4 erfolgt über ein Paar von ovalen Zahnrädern 20';20'" und ein Paar von kreisförmigen Zahnrädern 21';21", wobei die Drehmomentübertragung von dem mit der gleichförmig rotierenden Antriebswelle 16 verbundenen ovalen Zahnrad 20' auf das mit einer ungleichförmig rotierenden Hilfswelle 22 verbundene ovale Zahnrad 20'" erfolgt und von dort über ein ebenfalls mit der Hilfswelle 22 verbundenes kreisförmiges Zahnrad 21' auf das mit der zweiten Welle 4 verbundene, kreisförmige Zahnrad 21" erfolgt. Die Längsachsen 5;6;17;23 der Antriebswelle 16, der erste und zweiten Welle 5;6 sowie der Hilfswelle 22 sind parallel, wobei zwischen der Antriebswelle 16 und der ersten Welle 3 ein Abstand Z ist, welcher der Summe der Halbachsen a;b der zwei ovalen Zahnräder 20';20" entspricht. Ebenfalls um den Abstand Z voneinander entfernt sind die Antriebswelle 16 und die Hilfswelle 22. Die kreisförmigen Zahnräder 21';21" dienen zur Herstellung der notwendigen Drehrichtung für die beiden Wellen 3;4 und sind in ihrem Durchmesser an den notwendigen Abstand zwischen den beiden Wellen 3;4 angepasst.

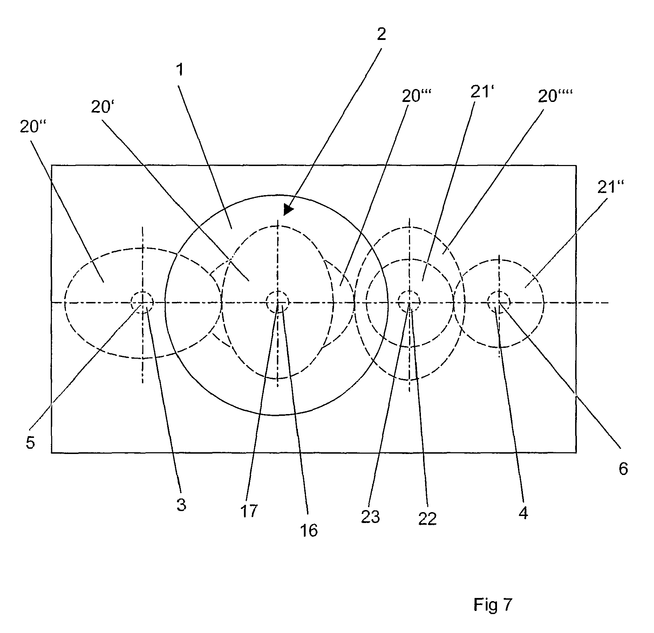

In Fig. 7 ist eine Ausführungsform des Getriebes 2 dargestellt, welche sich von der in Fig. 2 dargestellten Ausführungsform nur darin unterscheidet, dass die Drehmomentübertragung von der Antriebswelle 16 auf die erste Welle 3 über zwei ovale Zahnräder 20';20" erfolgt und zugleich eine Drehmomentübertragung von der Antriebswelle 16 auf die zweite Welle 4 über zwei ovale Zahnräder 20''';20'''' und zwei kreisförmige Zahnräder 21'; 21" erfolgt. Beide Paare von ovalen Zahnrädern 20';20";20"';20"" sind derart ausgestaltet, dass das Verhältnis zwischen den kleinen Halbachsen b und den grossen Halbachsen a 1 : √2 beträgt. Die beiden mit der Antriebswelle 16 verbundenen ovalen Zahnräder 20';20'" sind bezüglich ihrer Halbachsen a;b um 90° gegeneinander gedreht. Ferner ist zwischen der Antriebswelle 16 und der zweiten Welle 4 eine Hilfswelle 22 angeordnet, mit welcher einmal das ovale Zahnrad 20"" und das kreisförmige Zahnrad 21' verbunden ist. Die beiden kreisförmigen Zahnräder 21';21" dienen dazu, dass der Drehsinn der beiden Wellen 3;4 gegenläufig ist. Die Antriebswelle 16, die erste und die zweite Welle 3;4 sowie die Hilfswelle 22 sind so angeordnet, dass ihre Längsachsen 5;6;17;23 parallel stehen.

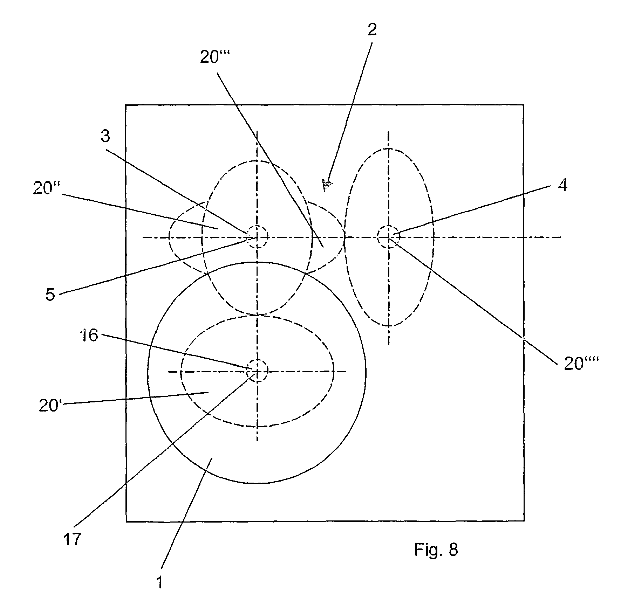

In Fig. 8 ist eine Ausführungsform des Getriebes 2 dargestellt, welche sich von der in Fig. 2 dargestellten Ausführungsform nur darin unterscheidet, dass die Drehmomentübertragung zwischen der Antriebswelle 16 und jeder der beiden Wellen 3;4 mittels je zwei ovalen Zahnrädern 20';20";20"';20"" erfolgt. Dabei ist ein ovales Zahnrad 20' mit der Antriebswelle 16, zwei ovale Zahnräder 20";20"' mit der ersten Welle 3 und ein ovales Zahnrad 20"" mit der zweiten Welle 4 verbunden. Die beiden mit der ersten Welle 3 verbundenen ovalen Zahnräder 20";20'" sind bezüglich ihrer Halbachsen um 90° gegeneinander gedreht. Ferner ist das mit der Antriebswelle 16 und das erste mit der ersten Welle 3 verbunden Zahnräder 20';20" derart ausgestaltet, dass das Verhältnis zwischen den kleinen Halbachsen b und den grossen Halbachsen a 1 : √2 beträgt, während das zweite mit der ersten Welle 3 verbundene ovale Zahnrad 20'" und das mit der zweiten Welle 4 verbundene ovale Zahnrad 20"" derart ausgestaltet sind, dass das Verhältnis zwischen den kleinen Halbachsen b und den grossen Halbachsen a 1 : 2 beträgt.

## Patentansprüche

1. Vorrichtung zur Erzeugung von pulsierenden Bewegungen umfassend
A) zwei parallele Wellen (3;4) mit je einer Längsachse (5;6), je einem hinteren Ende (7;8) und je einem vorderen Ende (9;10);
B) ein Getriebe (2) mit mindestens zwei Zahnrädern (20;21), wobei mindestens zwei Zahnräder (20) ovale Zahnräder sind und je ein Zahnrad (20;21) mit je einem hinteren Ende (7;8) der zwei Wellen (3;4) verbunden ist;
C) zwei bogenartigen Antriebshebel (30;31) mit je einem ersten Ende (32;33) und je mindestens einem zweiten Ende (34;35), wobei jedes erste Ende (32;33) der Antriebshebel (30;31) um eine erste Drehachse (11;12) rotierbar mit je einem vorderen Ende (9;10) der zwei Wellen (3;4) verbunden ist; und
E) einen Antriebskörper (40), welcher um zwei zweite Drehachsen (13;14) rotierbar mit den zweiten Enden (34;35) der Antriebshebel (30;31) verbunden ist,
**dadurch gekennzeichnet, dass**
F) der Antriebskörper (40) ein polysomartiger Körper, i.e. ein Oloid ist,
G) die Schenkel jedes bogenartigen Antriebshebels (30;31) eine Ebene (36;37) aufspannen und dass die zweiten Drehachsen (13;14) in den Ebenen (36;37) liegen;
H) die zwei zweiten Drehachsen (13;14) einen Abstand A zueinander aufweisen
I) an jedem Antriebshebel (30;31) zwischen der ersten Drehachse (11;12) und der zweiten Drehachse (13;14) ein Abstand B ist; und
J) dass A = B ist.

2. Vorrichtung nach Anspruch 1, **dadurch gekennzeichnet, dass** die ersten Drehachsen (11;12) quer zu den Ebenen (36;37) stehen.

3. Vorrichtung nach Anspruch 1 oder 2, **dadurch gekennzeichnet, dass** die zweiten Drehachsen (13; 14) windschief zueinander stehen.

4. Vorrichtung nach einem der Ansprüche 1 bis 3, **dadurch gekennzeichnet, dass** sie Antriebsmittel (1) umfasst, welche zum rotativen Antrieb mindestens eines Zahnrades (20;21) im Getriebe (2) dienen.

5. Vorrichtung nach einem der Ansprüche 1 bis 4, **dadurch gekennzeichnet, dass** die ovalen Zahnräder (20) eine grosse Halbachse a und eine kleine Halbachse b aufweisen und die Form des Ovals **dadurch** festgelegt ist, dass zwei ineinander eingreifende Zahnräder (20) sich bei konstantem Achsabstand formschlüssig abwälzen.

6. Vorrichtung nach einem der Ansprüche 1 bis 5, **dadurch gekennzeichnet, dass** sich der Achsabstand zwischen zwei ineinander eingreifenden ovalen Zahnrädern (20) aus der Summe der grossen Halbachse a und der kleinen Halbachse b dieser beiden ovalen Zahnräder (20) zusammensetzt.

7. Vorrichtung nach einem der Ansprüche 1 bis 6, **dadurch gekennzeichnet, dass** mindestens ein ovales Zahnrad (20) ein Verhältnis zwischen seiner kleinen Halbachse (b) und seiner grossen Halbachse (a) von 1 : √2 aufweist.

8. Vorrichtung nach einem der Ansprüche 1 bis 7, **dadurch gekennzeichnet, dass** mindestens ein ovales Zahnrad (20) ein Verhältnis zwischen seiner kleinen Halbachse (b) und seiner grossen Halbachse (a) von 1 : 2 aufweist.

## Claims

1. A device to generate pulsed motions, comprising:
(A) two parallel shafts (3; 4) each having a longitudinal axis (5; 6), each having a rear end (7; 8) and each having a front end (9; 10);
(B) a gear unit (2) comprising at least two gears (20; 21), at least two gears (20) being oval gears and each gear (20; 21) being connected to one of the rear ends (7; 8) of the two shafts (3; 4);
(C) two arcuate drive levers (30; 31) each having a first end (32; 33) and each having at least one second end (34; 35), where each first end (32; 33) of the drive levers (30; 31) are connected in rotatable manner with one respective front end (9; 10) of the two shafts (3; 4) about a first axis of rotation (11; 12); and
(E) a drive body (40) connected to the second ends (34; 35) of the drive levers (30; 31) so as to be rotatable about two second axes of rotation (13; 14),
**characterized in that**
(F) the drive body (40) is a polysomic body, i.e. an oloid,
(G) the legs of each arcuate drive lever (30; 31) subtend a plane (36; 37) and the second axes of rotation (13; 14) are situated in the planes (36; 37),
(H) the two second axes of rotation (13; 14) are a distance A apart
(I) at each drive lever (30; 31) the first axis of rotation (11; 12) and the second axis of rotation (13; 14) are separated by a gap B, and
(J) A = B.

2. A device as claimed in claim 1, **characterized in that** the first axes of rotation (11; 12) are transverse to the planes (36; 37).

3. Device as claimed in either of claims 1 and 2, **characterized in that** the second axes of rotation (13; 14) are mutually skewed.

4. Device as claimed in one of claims 1 through 3, **characterized in that** it comprises drive elements (1) to rotatively drive at least one gear (20; 21) in the gear unit (2).

5. Device as claimed in one of claims 1 through 4, **characterized in that** the oval gears (20) exhibit a large semi-axis a and a small semi-axis b and **in that** the shape of the oval is determined **in that** two mutually engaging gears (20) roll off one another at constant axial separation in positively, i.e. geometrically locking manner.

6. Device as claimed in one of claims 1 through 5, **characterized in that** the distance between the axes of two mutually engaging oval gears (20) is composed of the sum of the large semi-axis a and the small semi-axis b of these two oval gears (20).

7. Device as claimed in one of claims 1 through 6, **characterized** at least one oval gear (20) exhibits a ratio of its small semi-axis b to its large semi-axis a of 1/√2.

8. Device as claimed in one of claims 1 through 7, **characterized in that** at least one oval gear (20) exhibits a ratio of its small semi-axis b to its large semi-axis a of 1/2..

## Revendications

1. Dispositif de génération de mouvements de pulsation comprenant :
A) deux arbres parallèles (3 ; 4) comportant chacun axe longitudinal (5 ; 6), une extrémité arrière (7 ; 8) et une extrémité avant (9 ; 10) ;
B) une transmission (2) comportant au moins deux roues dentées (20 ; 21), au moins deux roues dentées (20) étant des roues dentées ovales et chacune des roue dentée (20 ; 21) étant reliée à une extrémité arrière (7 ; 8) des deux arbres (3 ; 4) ;
C) deux leviers d'entraînement courbés (30 ; 31) comportant chacun une première extrémité (32 ; 33) et au moins une deuxième extrémité (34 ; 35), chaque première extrémité (32 ; 33) du levier d'entraînement (30 ; 31) étant reliée à une extrémité avant (9 ; 10) des deux arbres (3 ; 4) de manière à pouvoir tourner autour d'un premier axe de rotation (11 ; 12) ; et
E) un corps d'entraînement (40) qui est relié aux deuxièmes extrémités (34 ; 35) des leviers d'entraînement (30 ; 31) de manière à pouvoir tourner autour des deux deuxièmes axes de rotation (13 ; 14),
**caractérisé en ce que**
F) le corps d'entraînement (40) est un corps de type polysome c'est-à-dire un oloïde ;
G) la branche de chaque levier d'entraînement courbé (30 ; 31) s'étend dans un plan (36 ; 37) et les deuxièmes axes de rotation (13 ; 14) se trouvent dans les plans (36 ; 37) ;
H) les deux deuxièmes axes de rotation (13 ; 14) sont distants l'un de l'autre d'une distance A ;
1) au niveau de chaque levier d'entraînement (30 ; 31) le premier axe de rotation (11 ; 12) et le deuxième axe de rotation (13 ; 14) sont distants l'un de l'autre d'une distance B ; et
J) A = B.

2. Dispositif selon la revendication 1, **caractérisé en ce que** les premiers axes de rotation (11 ; 12) sont transversaux aux plans (36 ; 37).

3. Dispositif selon la revendication 1 ou 2, **caractérisé en ce que** les deuxièmes axes de rotation (13 ; 14) ne sont pas dans un même plan.

4. Dispositif selon l'une des revendications 1 à 3, **caractérisé en ce qu'**il comporte des moyens d'entraînement (1) qui servent à entraîner en rotation au moins une roue dentée (20 ; 21) dans la transmission (2).

5. Dispositif selon l'une des revendications 1 à 4, **caractérisé en ce que** les roues dentées ovales (20) présentent un grand demi-axe a et un petit demi-axe b et la forme de l'ovale est déterminée **en ce que** les deux roues dentées (20), qui engrènent l'une dans l'autre, roulent avec complémentarité de forme avec un écartement des axes constant.

6. Dispositif selon l'une des revendications 1 à 5, **caractérisé en ce que** l'écartement des axes entre deux roues dentées ovales (20), engrenant l'une dans l'autre, est égal à la somme du grand demi-axe a et du petit demi-axe b de ces deux roues dentées ovales (20).

7. Dispositif selon l'une des revendications 1 à 6, **caractérisé en ce que** le rapport entre le petit demi-axe (b) et le grand demi-axe (a) d'au moins une roue dentée ovale (20) est de 1:√2.

8. Dispositif selon l'une des revendications 1 à 7, **caractérisé en ce que** le rapport entre le petit demi-axe (b) et le grand demi-axe (a) d'au moins une roue dentée ovale (20) est de 1:2.
